Europäisches Patentamt

European Patent Office

Office européen des brevets

(19)

(11) Veröffentlichungsnummer: **0 128 354**
**B1**

(12) **EUROPÄISCHE PATENTSCHRIFT**

(45) Veröffentlichungstag der Patentschrift: **28.09.88**

(51) Int. Cl.⁴: **A 63 B 5/18,** A 63 C 19/04

(21) Anmeldenummer: **84105186.5**

(22) Anmeldetag: **05.05.84**

(54) **Aufsprungmatte.**

(30) Priorität: **04.06.83 DE 3320346**

(43) Veröffentlichungstag der Anmeldung:
**19.12.84 Patentblatt 84/51**

(45) Bekanntmachung des Hinweises auf die
Patenterteilung:
**28.09.88 Patentblatt 88/39**

(84) Benannte Vertragsstaaten:
**BE DE FR GB NL SE**

(56) Entgegenhaltungen:
**AT-A- 365 461**
**DE-A-2 540 036**

(73) Patentinhaber: **Hüls Troisdorf Aktiengesellschaft**
**Postfach 11 65**
**D-5210 Troisdorf (DE)**

(72) Erfinder: **Kautz, Rudolf**
**Drosselweg 5**
**D-5202 Hennef 1 (DE)**
Erfinder: **Breitscheidel, Ulrich**
**Kapellenstrasse 43a**
**D-5200 Siegburg (DE)**
Erfinder: **Bepler, Wilfried, Dr.**
**Siebengebirgsallee 70**
**D-5210 Troisdorf (DE)**

Courier Press, Leamington Spa, England.

**0 128 354**

**Beschreibung**

Die Erfindung bezieht sich auf eine Aufsprungmatte mit einer Kernschicht aus elastischem Schaumstoff, die aus mehreren zusammenkaschierten Schichten besteht, die bezüglich ihres dynamischen Dämpfungsverhaltens unterschiedliche Eigenschaften aufweisen und mit einer Hülle, die den sicherheitstechnischen Anforderungen gemäß DIN 7914 Teil 1 entspricht und eine Eindringtiefe P von 30 bis 40 für eine 60 mm dicke Matte und 40 bis 50 für eine 80 mm dicke Matte und eine Rückprallhöhe R von 20 bis 120 aufweist.

Turn- und Sportmatten mit einer Kernschicht aus Schaumstoff, beispielsweise als Judomatten, Gymnastikmatten, Hygienematten, Ringermatten, Turnmatten sind beispielsweise aus der DE—A—26 49 789, dem DE—U—76 21 838 oder DE—U—78 06 307 bekannt. Nach dem DE—U—76 21 838 werden Turnmatten aus mehreren zusammenkaschierten Schichten aus geschlossenzelligem vernetzten Polyolefinschaum gleicher oder unterschiedlicher Dichte hergestellt, die sich durch ein niedriges Flächengewicht bei großer Elastizität auszeichnen. Es hat sich jedoch herausgestellt, daß solche mehrschichtigen Matten aus ausschließlich geschlossenzelligem vernetzten Polyolefinschaumstoffen nicht die Eigenschaften der Härte und Dämpfung für Turnmatten gemäß DIN 7914 Teil 1 erfüllen. Es hat sich herausgestellt, daß auch bei Einsatz von geschlossenzelligen Schaumstoffen unterschiedlicher Dichte gemäß DE—U—76 21 838 bei Erreichung der richtigen Eindringtiefe die Rückprallhöhe zu hoch wird. Die geforderten Eigenschaften gemäß DIN 7914 Teil 1 für Aufsprungmatten laufen sich im Prinzip etwas entgegen, so daß es nicht ohne weiteres möglich ist, eine Materialkombination oder ein Material zu finden, das beide Forderungen erfüllt. Es sind Aufsprungmatten, die die DIN 7914 Teil 1 erfüllen, aus Polyurethanschnitzeln als Verbundschaummatten bekannt, die etwa einen Aufbau gemäß DE—A—26 49 789 aufweisen. Diese Aufsprungmatten haben jedoch noch ein relativ hohes Flächengewicht.

Der Erfindung liegt die Aufgabe zugrunde, eine Aufsprungmatte mit den gemäß DIN 7914 Teil 1 geforderten Eigenschaften mit möglichst geringem Flächengewicht zu schaffen. Diese Aufgabe wird erfindungsgemäß dadurch gelöst, daß die Kernschicht aus einer Oberschicht und einer Unterschicht aus einem geschlossenzelligen Schaumstoff mit einem Raumgewicht von etwa 25 bis 40 kg/m$^3$ einer Zugfestigkeit von etwa 0,2 bis 0,3 N/mm$^2$ und einer Bruchdehnung von etwa 80 bis 100% und einer Mittelschicht aus einem offenzelligen Schaumstoff mit einem Raumgewicht von etwa 80 bis 110 kg/m$^3$, einer Zugfestigkeit won etwa 0,1 bis 0,15 N/mm$^2$ und einer Bruchdehnung von etwa 90 bis 110% besteht. Aufsprungmatten mit erfindungsgemäßem Aufbau stellen sicher, daß Matten gleicher Härte und Dämpfe hergestellt werden können, deren Aufsprungfläche in allen Richtungen den gleichen der Funktion entsprechenden Gleitreibungswiderstand aufweisen und die durch einen rutschfesten Unterbelag auch einen rutschicheren Aufsprung gewährleisten.

. Wesentlich für die mit den erfindungsgemäßen Eigenschaften auszustattenden Aufsprungmatten sind die zu wählenden Dicken der Oberschicht, Mittelschicht und Unterschicht, die sich bei einer Gesamtdicke der Aufsprungmatte von etwa 60 mm wie etwa 1:1:1 verhalten und bei einer Gesamtdicke von etwa 80 mm wie etwa 1:2:1 zueinander verhalten. Die erfindungsgemäß eingesetzten Materialien ermöglichen darüber hinaus eine relativ leichtgewichtige Aufsprungmatte herzustellen, die leicht zu handhaben ist. Eine Turnmatte mit einer Gesamtdicke von 60 mm weist ein mittleres spezifisches Gewicht von etwa 50 kg/m$^3$ und eine Turnmatte mit einer Gesamtdicke von 80 mm ein mittleres spezifisches Gewicht von etwa 60 kg/m$^3$ auf.

Je nach Schaumstoff können die einzelnen Schichten aus einer oder mehreren Teilschichten bestehen, die vollflächig miteinander kaschiert werden, ebenso werden Oberschicht, Mittelschicht und Unterschicht vollständig miteinander kaschiert, beispielsweise unter Verwendung eines Haftklebers oder Kontaktklebers oder Schmelzklebers.

Die Kernschicht kann des weiteren in bekannter Weise mit einer hautfreundlichen Oberschicht, beispielsweise einem Kunstleder sein und auf der Unterseite mit einem rutschhemmenden Belag versehen sein. Die Hülle kann entweder mit der Kernschicht vollflächig verbunden sein, es ist jedoch auch möglich, die Kernschicht lose in die Hülle einzulegen und dann die Hülle zu verschließen.

Geeignete Schaumstoffe für die Ausbildung der Oberschicht und Unterschicht sind vernetzte Polyolefinschaumstoffe, beispielsweise chemischvernetzte Polyolefinschaumstoffe mit einer gröberzelligen Struktur, mit einer mittleren Zellgröße von etwa 0,3 bis 1,5 mm Ø und Weich-Polyvinylchlorid-Schaumstoffe mit einer grobzelligen Struktur und mittlerem Zelldurchmesser von etwa 0,5 bis 3 mm.

Eine verteilhafte Ausbildung der Aufsprungmatte sieht vor, daß die Mittelschicht aus offenzelligem Schaumstoff vollständig von den geschlossenzelligen Schaumstoffen der Oberschicht und Unterschicht umgeben ist. Das bedeutet, daß zwischen Oberschicht und Unterschicht längs der umlaufender Seitenränder der Mittelschicht jeweils ein Randstreifen aus dem gleichen Schaumstoff wie die Oberschicht vorgesehen ist, der mit der Oberschicht und der Unterschicht ebenfalls vollflächig haftfest verbunden ist. In diesem Fall ist es möglich, die Mittelschicht beispielsweise nur linienförmig oder punktförmig mit der Oberschicht und der Unterschicht mittels eines Haftklebers zu verbinden.

Die Erfindung wird in der Zeichnung an Ausführungsbeispielen näher erläutert. Es zeigen
Figur 1 eine perspektivische Ansicht des Aufbaus der Aufsprungmatte,
Fig 2 + 3 zwei Querschnitte von verschiedenem Aufbau der Aufsprungmatte.
Die Aufsprungmatte 1 nach Figur 1 enthält einen Kern aus Schichten mehreren aus Schaumstoff,

2

wobei die Oberschicht 13 und die Unterschicht 11 aus einem geschlossenzelligen elastischen thermoplastischen Schaumstoff bestehen und die Mittelschicht 12 aus einem offenzelligen weichelastischen Schaumstoff besteht. Die Schichten 11, 12, 13 sind vollflächig miteinander kaschiert. Auf der Unterseite der Unterschicht 11 ist die rutschhemmende Schicht 10, beispielsweise ein rutschhemmendes Netz oder Flächengebilde aus Gummi oder Kunststoff aufkaschiert. Auf der Oberseite der Oberschicht 13 kann eine hautfreundliche Oberfläche 14, beispielsweise ein textiles Flächengebilde oder eine Folie aufkaschiert sein, die ggf. auch über die seitlichen Ränder bis zur Unterseite der Aufsprungmatte 1 reicht.

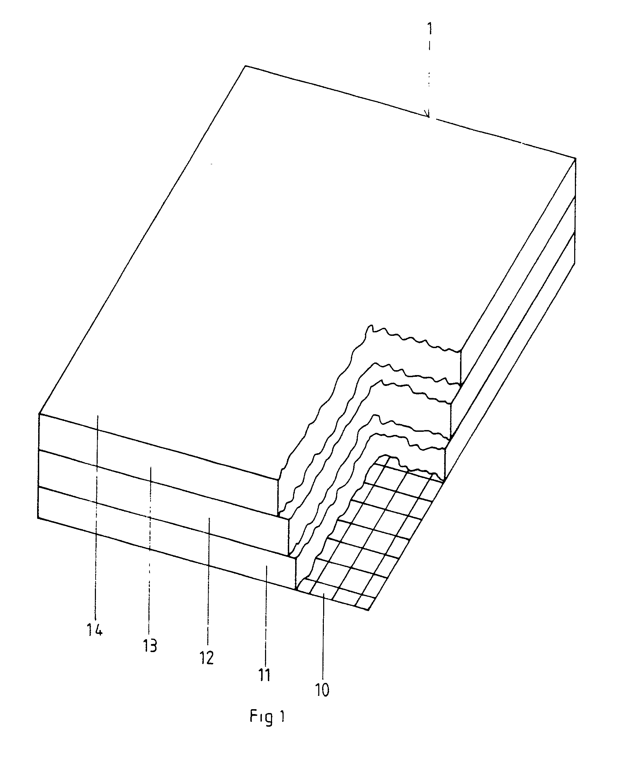

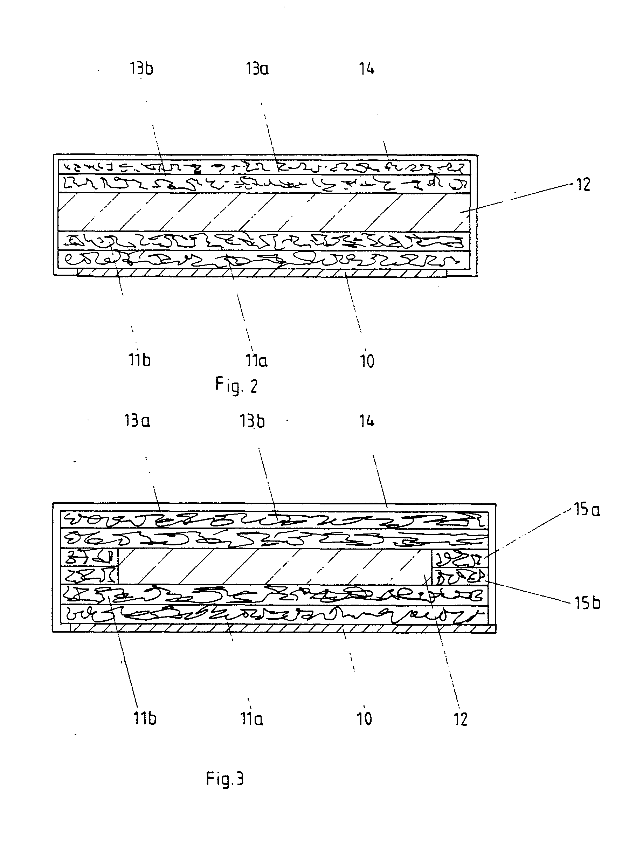

In der Figur 2 ist im Querschnitt der Aufbau einer Aufsprungmatte gemäß Figur 1 dargestellt, wobei die Oberfläche der Aufsprungmatte mit dem textilen Flächengebilde 14 umhüllt ist, die auf der Unterseite von der rutschhemmenden Schicht 10 ergänzt wird. In dem gezeigten Beispiel nach der Figur 2 ist die Oberschicht 13 aus zwei Schaumstoffteilschichten 13a und 13b gleicher Qualität zusammenkaschiert, ebenfalls die Unterschicht 11 aus den Teilschichten 11a, 11b. Die Anzahl der Teilschichten richtet sich nach der Gesamtdicke der herzustellenden Aufsprungmatte.

In der Figur 3 ist ein Querschnitt der Aufsprungmatte 1 mit einem variierten Aufbau bezeigt, wobei die Mittelschicht 12 aus offenzelligem Schaumstoff vollständig von dem geschlossenzelligen Schaumstoff der Oberschicht und Unterschicht durch Ausbildung der Randstreifen 15 ggf, aus den Teilschichten 15a, 15b umhüllt wird. Die einzelnen Schichten bzw. Teilschichten 11, 13, 15 sind beispielsweise durch Flammkaschieren vollflächig miteinander verbunden. Der Verbund der Schichten 11, 13 mit der Mittelschicht 12 hingegen kann beispielsweise mittels eines Haftklebers oder Kontaktklebers erfolgen, wobei bei der Ausbildung gemäß Figur 3 eine linienförmige oder punktförmige Befestigung ausreicht.

In der beigefügten Tabelle sind die Eigenschaften von Aufsprungmatten mit erfindungsgemäßem Aufbau und Aufsprungmatten mit einem Aufbau gemäß DE—U—76 21 838 vergleichsweise dargestellt. Es zeigt sich, daß mit einem Aufbau aus nur geschlossenzelligen vernetzten Polyolefinschaumstoffen die Forderungen für Aufsprungmatten der Eigenschaften gemäß DIN 7914, Teil 1 nicht erfüllt werden können. Das Raumgewicht wird gemäß DIN 53420, Zugfestigkeit und Bruchdehnung gemäß DIN 53571 ermittelt.

Tabelle

| | | | | | Vergleich | Vergleich | Vergleich |
|---|---|---|---|---|---|---|---|
| Oberschicht | 19 mm TROCELLEN * RG 30 kg/m³ | 20 mm TROCELLEN RG 30 kg/m³ | 25 mm TROCELLEN RG 30 kg/m³ | 20 mm TROCELLEN RG 30 kg/m³ | 25 mm TROCELLEN RG 30 kg/m³ | 60 mm TROCELLEN RG 25 kg/m³ | 5 mm TROCELLEN RG 100 kg/m³ |
| Mittelschicht | 23 mm TROVIPOR * RG 87 kg/m³ | 19 mm TROVIPOR RG 88 kg/m³ | 31 mm TROVIPOR RG 92 kg/m³ | 40 mm TROVIPOR RG 92 kg/m³ | 5 mm TROCELLEN RG 100 kg/m³ | | 50 mm TROCELLEN RG 25 kg/m³ |
| Unterschicht | 19 mm TROCELLEN RG 30 kg/m³ | 20 mm TROCELLEN RG 30 kg/m³ | 25 mm TROCELLEN RG 30 kg/m³ | 20 mm TROCELLEN RG 30 kg/m³ | 25 mm TROCELLEN RG 30 kg/m³ | | 5 mm TROCELLEN RG 100 kg/m³ |
| Gesamtdicke (mm) | ca. 62 | ca. 60 | ca. 82 | ca. 80 | ca. 60 | ca. 60 | ca. 62 |
| Eindringtiefe P DIN 7914, T1 | ca. 31 | ca. 31 | ca. 40 | ca. 43 | ca. 31 | ca. 36 | ca. 30 |
| Rückprallhöhe R DIN 7914, T1 | ca. 84 | ca. 109 | ca. 118 | ca. 70 | ca. 154 | ca. 185 | ca. 161 |

* TROCELLEN = chem. vernetzter Polyethylenschaumstoff der Dynamit Nobel AG
* TROVIPOR = Weich-Polyvinylchloridschaumstoff der Dynamit Nobel AG

0 128 354

## Patentansprüche

1. Aufsprungmatte (1) mit einer Kernschicht aus elastischem Schaumstoff, die aus mehreren zusammenkaschierten Schichten besteht, die bezüglich inhres dynamischen Dämpfungsverhaltens unterschiedliche Eigenschaften aufweisen, und mit einer Hülle, die den sicherheitstechnischen Anforderungen gemäß DIN 7914, Teil 1 entspricht und eine Eindringtiefe P von 30 bis 40 für eine 60 mm dicke Matte und 40 bis 50 für eine 80 mm dicke Matte und eine Rückprallhöhne R von 20 bis 120 aufweist, dadurch gekennzeichnet, daß die Kernschicht aus einer Oberschicht (13) und einer Unterschicht (11) aus einem geschlossenzelligen Schaumstoff mit einem Raumgewicht von etwa 25 bis 40 kg/m$^3$, einer Zugfestigkeit von 0,2 bis 0,3 N/mm$^2$ und einer Bruchdehnung von etwa 80 bis 100% und einer Mittelschicht (12) aus einem offenzelligen Schaumstoff mit einem Raumgewicht von etwa 80 bis 110 kg/m$^3$, einer Zugfestigkeit von etwa 0,1 bis 0,15 N/mm$^2$ und einer Bruchdehnung von etwa 90 bis 110% besteht.

2. Aufsprungmatte nach Anspruch 1, dadurch gekennzeichnet, daß die Dicken der Oberschicht, Mittelschicht und Unterschicht sich bei einer Gesamtdicke der Aufsprungmatte von etwa 60 mm wie etwa 1:1:1 und bei einer Gesamtdicke von etwa 80 mm wie etwa 1:2:1 zueinander verhalten.

3. Aufsprungmatte nach Anspruch 1 oder 2, dadurch gekennzeichnet, daß für die Oberschicht und Unterschicht ein vernetzter Polyolefinschaumstoff eingesetzt sind.

4. Aufsprungmatte nach einem der Ansprüche 1 bis 3, dadurch gekennzeichnet, daß für die Mittelschicht ein Weich-Polyvinylchloridschaum eingesetzt ist.

5. Aufsprungmatte nach einem der Ansprüche 1 bis 4, dadurch gekennzeichnet, daß die Mittelschicht vollständig von dem geschlossenzelligen Schaumstoff der Ober- und Unterschicht umgeben ist.

## Revendications

1. Tapis de réception (1), comportant une couche intérieure en mousse élastique, constituée de plusieurs couches assemblées à plat, qui présentent des propriétés différentes en ce qui concerne leur comportement d'amortissement dynamique, et une enveloppe, qui correspond aux exigences techniques de sécurité de DIN 7914, partie 1, et présence un profondeur de pénétration P de 30 à 40 pour un tapis épaise de 60 mm et de 40 à 50 pour un tapis épais de 80 mm, ainsi qu'une hauteur de rebond R de 20 à 120, caractérisé en ce que la couche intérieure est constituée d'une couche supérieure (13) et d'une couche inférieure (11) en une mousse à cellules fermées, qui présente un densité d'environ 25 à 40 kg/m$^3$, une résistance en traction de 0,2 à 0,3 N/mm$^2$, et un allongement à la rupture d'environ 80 à 100%, et d'un couche centrale (12) en une mousse à cellules ouvertes, qui présente une densité d'environ 80 à 110 kg/m$^3$, une résistance en traction d'environ 0,1 à 0,15 N/mm$^2$, et un allongement à la rupture d'environ 90 à 110%.

2. Tapis de réception conforme à la revendication 1, caractérisé en ce que les épaisseurs de la couche supérieure, de la couche centrale et de la couche inférieure sont les unes par rapport aux autres dans le rapport 1:1:1 environ, pour une épaisseur totale de 60 mm environ du tapis de réception, et dans le rapport 1:2:1, pour une épaisseur totale d'environ 80 mm.

3. Tapis de réception conforme à la revendication 1 ou 2, caractérisé en ce que l'on utilise, pour la couche supérieure et la couche inférieure, une mousse de polyoléfine réticulée.

4. Tapis de réception conforme à l'une des revendications 1 à 3, caractérisé en ce que l'on utilise, pour la couche centrale, une mousse de poly(chlorure de vinyle) plastifié.

5. Tapis de réception conforme à l'une des revendications 1 à 4, caractérisé en ce que la couche centrale est complètement entourée par la mousse à cellules fermées des couches supérieure et inférieure.

## Claims

1. Jumping mat (1) with a core layer of elastic foam material, which consists of serveral layers laminated together, which possess different properties with respect to their dynamic damping behaviour, and with a casing, which corresponds to the technical safety requirements according to DIN 7914 and possesses a penetration depth P of 30 to 40 for a 60 mm thick mat and 40 to 50 for an 80 mm thick mat and a rebound height R of 20 to 120, characterised in that the core layer consists of an upper layer (13) and a lower lower (11) of a closed celled foam material with a bulk density of about 25 to 40 kg/m$^3$, a tensile strength of 0.2 to 0.3 N/mm$^2$ and an elongation at break of about 80 to 100% and a middle layer (12) of an open celled foam material with a bulk density of about 80 to 110 kg/m$^3$, a tensile strength of about 0.1 to 0.15 N/mm$^2$ and an elongation at break of about 90 to 110%.

2. Jumping mat according to claim 1, characterised in that the thicknesses of the upper layer, middle layer and lower layer relate to one another at about 1:1:1 with a total thickness of jumping mat of about 60 mm and at about 1:2:1 with a total thickness of about 80 mm.

3. Jumping mat according to claim 1 or 2, characterised in that there is employed a cross-linked polyolefin foam material for the upper layer and lower layer.

4. Jumping mat according to one of claims 1 to 3, characterised in that a soft polyvinyl chloride foam material is employed for the middle layer.

5. Jumping mat according to one of claims 1 to 4, characterised in that the middle layer is encased completed by the closed celled foam material of the upper layer and lower layer.

Fig 1

13b       13a       14

12

11b       11a       10

Fig. 2

13a       13b       14

15a

15b

11b       11a       10       12

Fig. 3